# EUROPEAN PATENT APPLICATION

(11) **EP 4 836 180 A1**
(43) Date of publication of application: **04.11.2026**
(21) Application number: 24912703.6
(22) Date of filing: 23.12.2024
(51) Int. Cl.: H01M 50/586, H01M 4/13, H01M 10/052, H01M 10/0587, H01M 50/531, H01M 50/536, H01M 50/591

(54) **NON-AQUEOUS ELECTROLYTE SECONDARY BATTERY**

(30) Priority: 27.12.2023 JP 2023220367
(71) Applicant: Panasonic Intellectual Property Management Co., Ltd., Kadoma-shi, Osaka 571-0057 (JP)
(72) Inventor: SASA, Tatsuro, Kadoma-shi, Osaka 571-0057 (JP); MORIYAMA, Toshitaka, Kadoma-shi, Osaka 571-0057 (JP)
(74) Representative: Novagraaf International SA
(86) International application number: PCT/JP2024/045381
(87) International publication number: WO 2025/142816

(57) **Abstract**

A non-aqueous electrolyte secondary battery includes: an electrode body (14) in which a first electrode plate and a second electrode plate are wound via a separator; and current collector plates (17, 18) disposed on one side of the electrode body in the winding axis direction. The first electrode plate includes: a first core body made of a metal foil; a first mixture layer formed on at least a first surface of the first core body; and a first core body exposed portion in which the first core body is exposed, and which is provided at an end portion on one side in the short side direction of the electrode plate, the one side being the current collector plate side of the first surface. In a boundary region between the first mixture layer and the first core body exposed portion of the first surface, a protective layer for short circuit suppression is provided in the electrode plate longitudinal direction. The first electrode plate has an unwelded and uncoated region (39) provided in a portion including an inner peripheral-side end portion between a current collector plate welded portion (38) and the protective layer.

## Description

### TECHNICAL FIELD

The present disclosure relates to a non-aqueous electrolyte secondary battery.

### BACKGROUND ART

There has been known a non-aqueous electrolyte secondary battery comprising a winding-type electrode assembly obtained by winding a positive electrode plate and a negative electrode plate via a separator and a housing that houses the electrode assembly and a non-aqueous electrolyte.

Patent Literature 1 describes that, in a non-aqueous electrolyte secondary battery, a short circuit of a positive electrode plate and a negative electrode plate configuring a winding-type electrode assembly is suppressed by applying an insulator layer (a protective layer) between an exposed portion (a core exposed portion) of current collector foil and an active material layer carrier (a mixture layer) in the positive electrode plate.

### CITATION LIST

### PATENT LITERATURE

PATENT LITERATURE 1: Japanese Unexamined Patent Application Publication No. 2020-72007

### SUMMARY

In a non-aqueous electrolyte secondary battery, it is conceivable that, in an electrode plate configuring a winding-type electrode assembly, a core exposed portion where a core is exposed is formed at a one side end portion in an electrode plate widthwise direction corresponding to a winding axial direction of the electrode assembly and a current collector plate welded portion welded to a current collector plate is provided in an electrode plate longitudinal direction in the core exposed portion. At this time, it is also conceivable that a protective layer for short circuit suppression is provided in the electrode plate longitudinal direction between the current collector plate welded portion and the mixture layer.

However, the present inventors have found that the electrode plate sometimes bends near the root of the protective layer and is likely to come into contact with another electrode plate to cause a short circuit when a charging and discharging cycle increases.

It is an advantage of the present disclosure to, in a non-aqueous electrolyte secondary battery in which a protective layer is provided between a current collector plate welded portion of an electrode plate and a mixture layer, suppress bending of the electrode plate near the root of the protective layer regardless of a charging and discharging cycle and achieve short circuit suppression.

A non-aqueous electrolyte secondary battery according to the present disclosure is a non-aqueous electrolyte secondary battery comprising: an electrode assembly obtained by winding a first electrode plate and a second electrode plate via a separator; and a current collector plate disposed on one side in a winding axial direction of the electrode assembly, wherein the first electrode plate includes: a first core made of metal foil; a first mixture layer formed at least on a first surface of the first core; and a first core exposed portion provided at one side end portion in a n electrode plate widthwise direction, which is a current collector plate side, on the first surface, the first core being exposed in the first core exposed portion, wherein a protective layer for short circuit suppression is provided in an electrode plate longitudinal direction in a boundary area between the first mixture layer and the first core exposed portion on the first surface, and the first electrode plate includes: a current collector plate welded portion welded to the current collector plate; and an unwelded uncoated area provided in a portion including an inner circumference side end portion between the current collector plate welded portion and the protective layer.

With the non-aqueous electrolyte secondary battery according to the present disclosure, since the unwelded uncoated area is provided at the inner circumference side end portion of the first electrode plate, it is possible to shorten, at an early stage of the charging and discharging cycle, a portion of the first core where the protective layer is provided. When the charging and discharging cycle of the secondary battery increases, stretching of the first core is larger at the inner circumference side end portion than in other portions. Even when the stretching of the first core is larger at the inner circumference side end portion in this way, since the portion of the first core where the protective layer is provided can be shortened as explained above, it is possible to prevent the portion where the protective layer is provided from excessively increasing in length because of the stretching. Since the unwelded uncoated area has lower rigidity and more easily bends than the portion of the first core where the protective layer is provided, even if the unwelded uncoated area stretches, the unwelded uncoated area easily bends to be a U-shape or the like in a cross section thereof. Accordingly, it is possible to prevent a formation portion of the protective layer from being affected by the stretching of the unwelded uncoated area to be bent. For this reason, it is possible to suppress the bend near the root of the protective layer and achieve short circuit suppression.

### BRIEF DESCRIPTION OF DRAWING

FIG. 1 is a sectional view along an axial direction of a non-aqueous electrolyte secondary battery in an example of an embodiment.
FIG. 2 is a perspective view in which a part of an electrode assembly configuring the non-aqueous electrolyte secondary battery in the example of the embodiment is exploded.
FIG. 3 is an A part enlarged view of FIG. 1 schematically illustrating a part at an early stage of a charging and discharging cycle.
FIG. 4 is an exploded view of a positive electrode plate configuring the non-aqueous electrolyte secondary battery illustrated in FIG. 1.
FIG. 5 is a diagram corresponding to FIG. 3 in the case in which the number of cycles of a charging and discharging cycle increases.
FIG. 6 is a diagram illustrating a measurement result of calculating a relation between the number of turns from the innermost circumference and a stretching amount in the positive electrode plate using the same configuration as a configuration illustrated in FIG. 1.
FIG. 7 is a diagram corresponding to FIG. 3 at an early stage of a charging and discharging cycle of a non-aqueous electrolyte secondary battery in a comparative example.
FIG. 8 is a diagram corresponding to FIG. 3 in the case in which the number of cycles of the charging and discharging cycle increases in the non-aqueous electrolyte secondary battery in the comparative example.
FIG. 9 is a diagram corresponding to FIG. 4 in a non-aqueous electrolyte secondary battery in another example of the embodiment.

### DESCRIPTION OF EMBODIMENTS

Conventionally, in a non-aqueous electrolyte secondary battery, it has been conceivable that a first mixture layer is formed at least on a first surface of a first core made of metal foil, a first core exposed portion is provided at the one side end portion in an electrode plate widthwise direction, which is a current collector plate side, on the first surface, and a current collector plate welded portion welded to the current collector plate is provided in an electrode plate longitudinal direction in the first core exposed portion. At this time, it has been found that, when a protective layer for short circuit suppression is provided in the electrode plate longitudinal direction between the current collector plate welded portion and the mixture layer, the electrode plate sometimes bends near the root of the protective layer and is likely to come into contact with another electrode plate to cause a short circuit when a charging and discharging cycle increases.

The inventors have found as a result of intensive studies that, when a charging and discharging cycle increases, in an electrode assembly, in particular, stretching of an electrode plate increases in a portion near the innermost circumference of the electrode plate and, accordingly, a protective layer increases in length to a current collector plate side and the electrode plate easily bends near the root of the protective layer. Thus, the inventors have found that it is possible to suppress the bending of the electrode plate near the root of the protective layer when the protective layer is provided in a boundary area between a first mixture layer and a first core exposed portion on a first surface of a first electrode plate and the first electrode plate includes a current collector plate welded portion welded to a current collector plate and an unwelded uncoated area in a portion including an inner circumference side end portion between the current collector plate welded portion and the protective layer. Specifically, since the unwelded uncoated area is provided at the inner circumference side end portion between the current collector plate welded portion and the protective layer in the first electrode plate, even if the charging and discharging cycle increases and stretching of the first core increases, the unwelded uncoated area having lower rigidity and more easily bending than a portion of the first core where the protective layer is provided increases in length and, on the other hand, it is possible to prevent the high-rigidity portion of the first core where the protective layer is provided from excessively increasing in length. Accordingly, it is possible to suppress the bend near the root of the protective layer and achieve short circuit suppression.

An embodiment according to the present invention is explained in detail below with reference to the accompanying diagrams. In the following explanation, specific shapes, materials, numerical values, directions, and the like are exemplifications for facilitating understanding of the present invention and can be changed as appropriate according to the specifications of a non-aqueous electrolyte secondary battery. In the following explanation, the term "substantially" is used in, for example, a meaning including a meaning considered substantially the same in addition to a meaning that is completely the same. Further, when a plurality of embodiments and a plurality of modifications are included in the following explanation, it is assumed from the beginning that characteristic portions of the embodiments and the modifications are used in combination as appropriate.

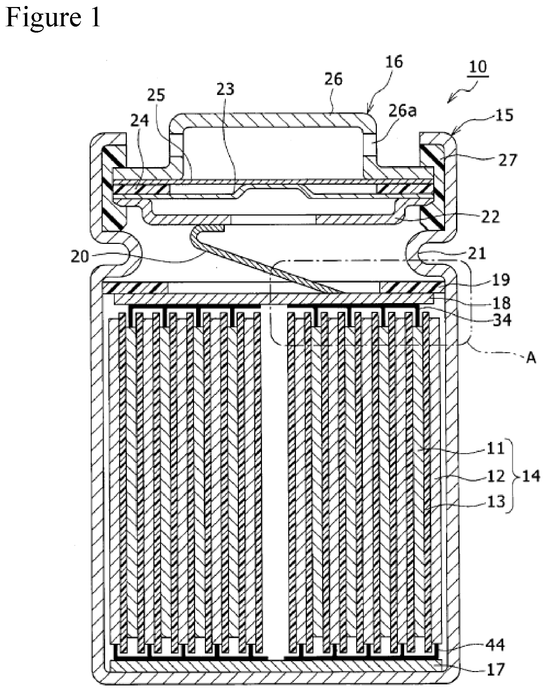

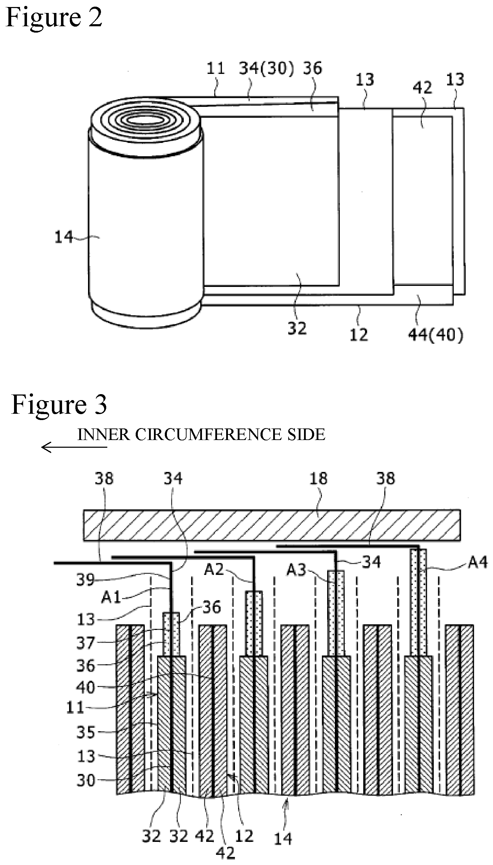

FIG. 1 is a sectional view along an axial direction of a non-aqueous electrolyte secondary battery 10 in the embodiment. FIG. 2 is a perspective view in which a part of an electrode assembly 14 configuring the non-aqueous electrolyte secondary battery 10 is exploded. FIG. 3 is an A part enlarged view of FIG. 1 schematically illustrating a part at an early stage of a charging and discharging cycle.

As illustrated in FIG. 1 to FIG. 3, the non-aqueous electrolyte secondary battery 10 comprises a winding-type electrode assembly 14, a non-aqueous electrolyte (not illustrated), and a housing 15 and a sealing assembly 16, which are metal cans. The winding-type electrode assembly 14 includes a positive electrode plate 11, a negative electrode plate 12, and a separator 13. As illustrated in FIG. 2 explained below, the positive electrode plate 11 and the negative electrode plate 12 are wound in a spiral shape via the separator 13. In the following explanation, an axial direction one side of the electrode assembly is sometimes referred to as "upward" and an axial direction other side is sometimes referred to as "downward". The non-aqueous electrolyte includes a non-aqueous solvent and electrolyte salt dissolved in the non-aqueous solvent. In the following explanation, the non-aqueous electrolyte secondary battery 10 is described as a secondary battery 10.

As illustrated in FIG. 2, the electrode assembly 14 has a winding structure in which the positive electrode plate 11 having an elongated shape and the negative electrode plate 12 having an elongated shape are wound via the separator 13 having an elongated shape. The positive electrode plate 11 protrudes further upward than the negative electrode plate 12 and the separator 13. The negative electrode plate 12 protrudes further downward than the positive electrode plate 11 and the separator 13.

The positive electrode plate 11 includes, at the upper side end portion, which is one side end portion in a winding axial direction (hereinafter sometimes described as axial direction) from a winding start side end to a winding end side end in the electrode plate longitudinal direction of the elongated positive electrode plate 11, a positive electrode core exposed portion 34 in which a positive electrode mixture layer 32 is not provided and a positive electrode core 30 is exposed. At the upper side end portion of the positive electrode plate 11, a positive electrode protective layer 36 for achieving short circuit suppression for the positive electrode core 30 is provided between the positive electrode mixture layer 32 and the positive electrode core exposed portion 34. In the present embodiment, as explained below, the width in the electrode plate widthwise direction of the positive electrode protective layer 36 changes in the electrode plate longitudinal direction. As explained below, the positive electrode plate 11 includes a current collector plate welded portion 38 (FIG. 3) and an unwelded uncoated area 39 (FIG. 3) between the current collector plate welded portion 38 and the positive electrode protective layer 36.

The negative electrode plate 12 includes, at the lower side end portion, which is the other side end portion in the axial direction from the winding start side end to the winding end side end in the electrode plate longitudinal direction of the elongated negative electrode plate 12, a negative electrode core exposed portion 44 in which a negative electrode mixture layer 42 is not provided and a negative electrode core 40 is exposed. For this reason, the upper side end portion in the axial direction of the electrode assembly 14 is configured by the positive electrode core exposed portion 34 and the lower side end portion in the axial direction of the electrode assembly 14 is configured by the negative electrode core exposed portion 44.

In the present embodiment, the positive electrode plate 11 is equivalent to a first electrode plate and the negative electrode plate 12 is equivalent to a second electrode plate. The positive electrode core 30 is equivalent to a first core and the positive electrode mixture layer 32 is equivalent to a first mixture layer. The negative electrode core 40 is equivalent to a second core and the negative electrode mixture layer 42 is equivalent to a second mixture layer. Note that the first electrode plate may be the negative electrode plate 12 and the second electrode plate may be the positive electrode plate 11.

The non-aqueous electrolyte has ion conductivity (for example, lithium ion conductivity). The non-aqueous electrolyte includes a non-aqueous solvent and electrolyte salt dissolved in the non-aqueous solvent. The non-aqueous electrolyte is not limited to a liquid electrolyte (a non-aqueous electrolytic solution) and may be a solid electrolyte in which a gel polymer or the like is used. The secondary battery 10 is preferably a lithium ion battery. As the electrolyte salt, lithium salt such as LiBF₄ or LiPF₆ is used. As the non-aqueous solvent, for example, esters such as ethylene carbonate (EC), propylene carbonate (PC), dimethyl carbonate (DMC), ethyl-methyl carbonate (EMC), diethyl carbonate (DEC), and methyl propionate (MP) and ethers, nitriles, amides, and a mixture solvent of two or more kinds among the ethers, the nitriles, and the amides are used. The non-aqueous solvent may contain a halogen-substituted product obtained by substituting at least a part of hydrogen of these solvents with halogen atoms such as fluorine.

Examples of the halogen-substituted product include, for example, fluorinated cyclic carbonate such as fluoroethylene carbonate (FEC), fluorinated chain carbonate, and fluorinated chain carboxylic acid ester such as methyl fluoropropionate (FMP). In terms of suppression of deterioration in a charging and discharging cycle property of the non-aqueous electrolyte secondary battery, improvement of an input property, or the like, a non-aqueous electrolyte preferably includes FEC greater than or equal to 5 mass % with respect the mass of the non-aqueous electrolyte and more preferably includes FEC greater than or equal to 5 mass % and less than or equal to 15 mass % with respect to the mass of the non-aqueous electrolyte.

As the solid electrolyte, for example, a solid or gel polymer electrolyte, an inorganic solid electrolyte, or the like is used. The polymer electrolyte includes, for example, lithium salt and a matrix polymer or a non-aqueous solvent, lithium salt, and a matrix polymer. As the matrix polymer, for example, a polymer material that absorbs the non-aqueous solvent to gel is used. As the polymer material, for example, fluorocarbon resin, acrylic resin, or polyether resin is used. As the inorganic solid electrolyte, for example, a material publicly known in an all-solid-state lithium ion secondary battery (for example, an oxide-based solid electrolyte, a sulfide-based solid electrolyte, or a halide-based solid electrolyte) is used.

The positive electrode plate 11 includes a positive electrode core 30 and positive electrode mixture layers 32 formed on both surfaces of the positive electrode core 30. As the positive electrode core 30, a foil of metal stable in a potential range of the positive electrode plate 11, such as aluminum or an aluminum alloy, a film in which the metal is disposed on a surface layer, or the like can be used. The thickness of the positive electrode core 30 is, for example, greater than or equal to 10 µm and less than or equal to 30 µm. The positive electrode mixture layers 32 include a positive electrode active material, a conductive agent, and a binder. The positive electrode plate 11 can be manufactured by, for example, applying a positive electrode mixture slurry including the positive electrode active material, the conductive agent, and the binder onto the positive electrode core 30, drying a coating film, and thereafter compressing the positive electrode mixture slurry to form the positive electrode mixture layers 32 on both surfaces of the positive electrode core 30. Note that the positive electrode mixture layer 32 may be formed on only one surface of the positive electrode core 30. The thickness of the positive electrode mixture layer 32 is, for example, greater than or equal to 10 µm and less than or equal to 150 µm of the positive electrode core 30.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. A preferable example of the lithium-containing metal composite oxide is a composite oxide containing at least one of the group consisting of Ni, Co, Mn, and Al.

As the conductive agent included in the positive electrode mixture layer 32, carbon materials such as carbon black, acetylene black, Ketjenblack, and graphite can be exemplified. As the binder included in the positive electrode mixture layer 32, fluorocarbon resin such as polytetrafluoroethylene (PTFE) and polyvinylidene fluoride (PVdF), polyacrylonitrile (PAN), polyimide resin, acrylic resin, polyolefin resin, and the like can be exemplified. These kinds of resin and a cellulose derivative such as carboxymethyl cellulose (CMC) or salt thereof, polyethylene oxide, and the like may be concurrently used.

On both surfaces of the upper side end portion of the positive electrode core 30, positive electrode protective layers 36 are provided between the positive electrode mixture layers 32 and the positive electrode core exposed portions 34. The positive electrode protective layers 36 can be inorganic filler protective layers composed by including, at a predetermined ratio, an additive of an inorganic material such as alumina, resin like a non-aqueous water-soluble polymer such as polyvinylidene fluoride (PVdF), and a conductive additive such as acetylene black (AB) or carbon black (CB). For example, the positive electrode protective layers 36 can be composed by including the inorganic material such as alumina, the resin such as polyvinylidene fluoride (PVdF), and the conductive additive at a mass ratio of 100:16.7:0.5. Note that the conductive additive may be omitted in the positive electrode protective layers 36. As the positive electrode protective layers 36, various materials can be adopted if the materials can be provided on the surface of the positive electrode core 30 and have a function of suppressing a short circuit of the positive electrode core 30.

The negative electrode plate 12 includes a negative electrode core 40 and negative electrode mixture layers 42 formed on both surfaces of the negative electrode core 40. As the negative electrode core 40, a foil of metal stable in a potential range of the negative electrode plate 12, such as copper or a copper alloy, a film in which the metal is disposed on a surface layer, and the like can be used. The thickness of the negative electrode core 40 is, for example, greater than or equal to 5 µm and less than or equal to 30 µm. The negative electrode mixture layers 42 include a negative electrode active material and a binder. The negative electrode plate 12 can be manufactured by, for example, applying a negative electrode mixture slurry including the negative electrode active material and the binder onto the negative electrode core 40, drying a coating film, and thereafter compressing the negative electrode mixture slurry to form the negative electrode mixture layers 42 on both surfaces of the negative electrode core 40. Note that the negative electrode mixture layer 42 may be formed on only one surface of the negative electrode core 40. The thickness of the negative electrode mixture layer 42 is, for example, greater than or equal to 10 µm and less than or equal to 150 µm on one side of the negative electrode core 40.

As the negative electrode active material, in general, a carbon material that irreversibly occludes and emits lithium ions is used. A preferable carbon material is graphite including natural graphite such as flake graphite, lump graphite, and earthy graphite and synthetic graphite such as lump artificial graphite and graphitized mesophase carbon microbeads. The negative electrode mixture layer 42 may include, as the negative electrode active material, an Si material containing silicon (Si). As the negative electrode active material, metal alloyed with lithium other than Si, an alloy containing the metal, a compound containing the metal, or the like may be used.

As the binder included in the negative electrode mixture layer 42, as in the case of the positive electrode plate 11, fluorocarbon resin, PAN, polyimide resin, acrylic resin, polyolefin resin, or the like may be used. However, preferably, styrene-butadiene rubber (SBR) or a modified body thereof is used. The negative electrode mixture layer 42 may include CMC or salt thereof, polyacrylic acid (PAA) or salt thereof, polyvinyl alcohol, or the like in addition to, for example, SBR.

As the separator 13, a porous sheet having ion permeability and insulation is used. Specific examples of the porous sheet include a microporous membrane, a woven fabric, and a non-woven fabric. As the material of the separator 13, polyolefin resin such as polyethylene or polypropylene, cellulose, or the like is preferable. The separator 13 may have either a single layer structure or a laminated structure. A heat resistant layer or the like may be formed on the surface of the separator 13.

As illustrated in FIG. 1, the secondary battery 10 includes, on a downward side in the axial direction of the electrode assembly 14, a negative electrode current collector plate 17 made of metal such as nickel or a nickel alloy. The negative electrode core exposed portion 44 protruding from the electrode assembly 14 is joined to the negative electrode current collector plate 17. The negative electrode current collector plate 17 is joined to the inner surface of the bottom plate of the housing 15. The housing 15, to which the negative electrode core exposed portion 44 is electrically connected via the negative electrode current collector plate 17, becomes a negative electrode terminal.

The secondary battery 10 includes, on the upward side in the axial direction of the electrode assembly 14, a positive electrode current collector plate 18 made of metal such as aluminum or an aluminum alloy. The positive electrode core exposed portion 34 protruding from the electrode assembly 14 is joined to the positive electrode current collector plate 18. The secondary battery 10 includes an annular insulating plate 19 on the upward side in the axial direction of the positive electrode current collector plate 18.

One side end portion of a positive electrode connection lead 20 is joined to the upper surface of the positive electrode current collector plate 18 by welding or the like. The positive electrode connection lead 20 extends to the sealing assembly 16 side piercing through a through hole of the insulating plate 19. The other side end portion of the positive electrode connection lead 20 is connected to the lower surface of a filter 22 of the sealing assembly 16 by welding or the like. A cap 26 configuring the top plate of the sealing assembly 16 is electrically connected to the filter 22. Accordingly, the positive electrode current collector plate 18 is electrically connected to the cap 26 and the cap 26 becomes a positive electrode terminal. The positive electrode connection lead 20 is a conductive member made of, for example, metal containing aluminum as a main component.

The secondary battery 10 further comprises a gasket 27 made of resin disposed between the housing 15 and the sealing assembly 16. The gasket 27 is interposed between the housing 15 and the sealing assembly 16 and insulates the sealing assembly 16 from the housing 15. The gasket 27 has a role of a seal material for keeping air tightness of a battery inside and a role of an insulating material for insulating the housing 15 and the sealing assembly 16. The housing 15 includes an annular grooved portion 21 in a part in the axial direction.

The grooved portion 21 can be formed by, for example, spinning a part of a side surface to the radial direction inner side to be recessed to the radial direction inner side. The housing 15 includes a bottomed tubular portion including the grooved portion 21 and an annular shoulder portion. The bottomed tubular portion houses the electrode assembly 14 and a non-aqueous electrolyte. The shoulder portion is bent to the radial direction inner side from the end portion on an opening side of the bottomed tubular portion and extends to the inner side. The shoulder portion is formed when the upper end portion of the housing 15 is bent to the inner side and crimped to the circumferential edge portion of the sealing assembly 16. The sealing assembly 16 is crimped and fixed to the housing 15 between the shoulder portion and the grooved portion 21 via the gasket 27. In this way, the internal space of the secondary battery 10 is sealed.

The sealing assembly 16 has structure in which the filter 22, a lower vent member 23, an insulating member 24, an upper vent member 25, and the cap 26 are stacked in order from the electrode assembly 14 side. The members configuring the sealing assembly 16 has, for example, a disk shape or a ring shape. The members excluding the insulating member 24 are electrically connected to one another. The filter 22 has at least one through hole. The lower vent member 23 and the upper vent member 25 are connected at the centers thereof. The insulating member 24 is interposed between the circumferential edge portions thereof.

When the secondary battery 10 abnormally generates heat and the internal pressure of the secondary battery 10 rises, the lower vent member 23 deforms to push up the upper vent member 25 to the cap 26 side and ruptures and a current path between the lower vent member 23 and the upper vent member 25 is blocked. When the internal pressure further rises, the upper vent member 25 ruptures and gas is discharged from a through hole 26a of the cap 26. The discharge of the gas can prevent the internal pressure of the secondary battery 10 from excessively rising to rupture the secondary battery 10. Therefore, the safety of the secondary battery 10 is improved.

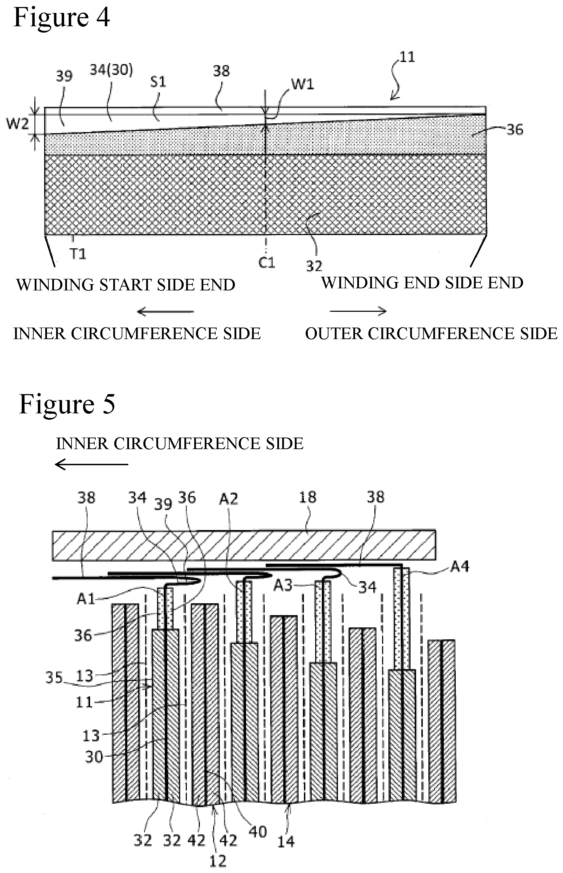

Next, a peripheral configuration of a joined portion between the electrode assembly 14 and the positive electrode current collector plate 18 in an upper part of the secondary battery 10 and a configuration of the positive electrode plate 11 are explained with reference to FIG. 3 and FIG. 4. FIG. 3 is an A part enlarged view of FIG. 1 schematically illustrating a part in a shipping state that is an early stage of a charging and discharging cycle. FIG. 4 is an exploded view of the positive electrode plate 11 configuring the secondary battery 10.

As illustrated in FIG. 3, the positive electrode core 30 includes an axial direction extending portion 37 extending substantially in parallel to the axial direction of the electrode assembly 14 from the upper end of a coated portion 35, on both surfaces of which the positive electrode mixture layers 32 are provided, and a current collector plate welded portion 38 bent at approximately 90 degrees toward the inner circumference side from the upper end of the axial direction extending portion 37 and extending in parallel to the lower surface of the positive electrode current collector plate. The current collector plate welded portion 38 is welded to the lower surface of the positive electrode current collector plate 18. The positive electrode protective layers 36 are provided on both surface of a portion close to the upper end of the coated portion 35 of the axial direction extending portion 37. The width in the electrode plate widthwise direction of the positive electrode protective layer 36 increases toward the outer circumference side of the electrode assembly 14. In the positive electrode plate 11, the current collector plate welded portion 38 welded to the positive electrode current collector plate 18 and the unwelded uncoated area 39 provided in a portion including the inner circumference side end portion between the current collector plate welded portion 38 and the positive electrode protective layer 36 are provided. In FIG. 3, the current collector plate welded portion 38 and the lower surface of the positive electrode current collector plate 18 are illustrated as being separated. However, actually, the upper surfaces of all of the current collector plate welded portions 38 in turning portions of the positive electrode plate 11 are welded in contact with the lower surface of the positive electrode current collector plate 18.

The current collector plate welded portions 38 in the adjacent turning portions of the positive electrode plate 11 partially overlap. Accordingly, it is possible to reduce continuity resistance between the positive electrode plate 11 and the positive electrode current collector plate 18. Note that the current collector plate welded portions 38 in the adjacent turning portions of the positive electrode plate 11 may not overlap.

FIG. 4 illustrates a first surface S1, which is a thickness direction one side surface of the positive electrode plate 11 in an exploded state of the positive electrode plate 11. The positive electrode core exposed portion 34, in which the positive electrode core 30 is exposed, is provided at the end portion on the upper side that is one side in the electrode plate widthwise direction, which is the positive electrode current collector plate 18 side, on the first surface S1. In FIG. 4, the positive electrode core exposed portion 34 is illustrated as a plain portion.

Further, in a boundary area between the positive electrode mixture layer 32 and the positive electrode core exposed portion 34 on the first surface S1, the positive electrode protective layer 36 is provided in the electrode plate longitudinal direction of the positive electrode plate 11. In FIG. 4, the positive electrode protective layer 36 is illustrated as a sand hatch portion. In FIG. 4, the positive electrode mixture layer 32 is indicated as a diagonal lattice portion.

As illustrated in FIG. 4, the upper side end edge of the positive electrode protective layer 36 is inclined to the upper side toward the winding end side end with respect to the electrode plate longitudinal direction such that the width in the electrode plate widthwise direction of the positive electrode protective layer 36 increases toward the outer circumference side of the electrode assembly 14. Accordingly, the width in the electrode plate widthwise direction of the positive electrode protective layer 36 changes in the electrode plate longitudinal direction.

Further, at the upper end portion that is one side end portion in the electrode plate widthwise direction of the positive electrode core exposed portion 34, the current collector plate welded portion 38 having a constant width in the electrode plate widthwise direction is formed in the electrode plate longitudinal direction. The positive electrode plate 11 includes the unwelded uncoated area 39 provided in a portion including the inner circumference side end portion between the current collector plate welded portion 38 and the positive electrode protective layer 36. Since the width in the electrode plate widthwise direction of the positive electrode protective layer 36 changes in the electrode plate longitudinal direction as explained above, the width in the electrode plate widthwise direction of the unwelded uncoated area 39 continuously decreases toward the winding end side end of the outermost circumferential portion from the winding start side end of the innermost circumferential portion. Accordingly, as illustrated in FIG. 3, in turning portions A1, A2, A3, and A4 of the positive electrode plate, the width in the electrode plate widthwise direction of the unwelded uncoated area 39 gradually increases toward the innermost circumference.

As the maximum width in the electrode plate widthwise direction of the unwelded uncoated area 39, based on a center C1 in the electrode plate longitudinal direction, a maximum width W2 on the inner circumference side is larger than a maximum width W1 on the outer circumference side. Further, as the average width in the electrode plate widthwise direction of the unwelded uncoated area 39, an average width Wm1 from the innermost circumferential portion to a fifth turning portion is larger than an average width Wm2 from a sixth turning portion to the outermost circumferential portion. In FIG. 4, the winding end side end of the fifth turning portion is indicated by T1.

With the secondary battery 10 explained above, in the positive electrode plate 11, the unwelded uncoated area 39 is provided in the portion including the inner circumference side end portion between the current collector plate welded portion 38 and the positive electrode protective layer 36. Accordingly, since the unwelded uncoated area 39 is provided at the inner circumference side end portion of the positive electrode plate 11, at an early stage of the charging and discharging cycle, it is possible to shorten a portion of the positive electrode core 30 where the positive electrode protective layer 36 is provided. When the charging and discharging cycle of the secondary battery 10 increases, the stretching of the positive electrode core 30 is larger at the inner circumference side end portion than in the other portions. In this way, even when the stretching of the positive electrode core 30 increases at the inner circumference side end portion, it is possible to shorten the portion of the positive electrode core 30 where the positive electrode protective layer 36 is provided as explained above. Therefore, it is possible to prevent the portion where the positive electrode protective layer 36 is provided from excessively increasing in length because of the stretching. The unwelded uncoated area 39 has lower rigidity and more easily bends than the portion of the positive electrode core 30 where the positive electrode protective layer 36 is provided. Therefore, even if the unwelded uncoated area 39 stretches, the unwelded uncoated area 39 easily bends to be a U-shape or the like in the cross section thereof. Accordingly, it is possible to prevent a formation portion of the positive electrode protective layer 36 from being affected by the stretching of the unwelded uncoated area 39 to be bent. For this reason, it is possible to suppress a bend near the root of the positive electrode protective layer 36 and achieve short circuit suppression.

FIG. 5 is a diagram corresponding to FIG. 3 in the case in which the number of cycles of the charging and discharging cycle increases. As illustrated in FIG. 5, when the number of cycles of the charging and discharging cycle of the secondary battery 10 increases, the positive electrode core 30, in which the positive electrode mixture layer 32 is provided, stretches in the up-down direction through repetition of charging and discharging. At this time, the stretching is larger on the inner circumference side than on the outer circumference side of the electrode assembly 14. This is considered to be because, although the stretching is limited by the housing 15 on the outer circumference side, on the inner circumference side, a hollow portion is present near the winding axis of the electrode assembly 14 and the stretching is allowed. For this reason, as in the embodiment, as the maximum width in the electrode plate widthwise direction of the unwelded uncoated area 39, based on the center C1 in the electrode plate longitudinal direction, the maximum width W2 on the inner circumference side is larger than the maximum width W1 on the outer circumference side. Therefore, it is possible to suppress a bend near the root of the positive electrode protective layer 36 and achieve short circuit suppression. Further, since the short circuit suppression can also be achieved because the positive electrode protective layer 36 can be enlarged on the outer circumference side, it is possible to increase the short circuit suppression effect.

As illustrated in FIG. 5, the coated portion 35 of the positive electrode mixture layer 32 greatly stretches in the up-down direction toward the inner circumference side because the number of cycles of the charging and discharging cycle increases. Even in this case, since the unwelded uncoated area 39 is large on the inner circumference side as illustrated in FIG. 3, the unwelded uncoated area 39 on the inner circumference side more greatly bends than on the outer circumference side. However, the stretching of the coated portion 35 on the inner circumference side can be absorbed on the lower side of the current collector plate welded portion 38 because of the bend. Accordingly, it is possible to prevent a portion where the positive electrode protective layer 36 having the higher rigidity than the unwelded uncoated area 39 is provided from being interposed in the up-down direction between the current collector plate welded portion 38 and the coated portion 35 and bending with respect to the axial direction. Accordingly, it is possible to suppress a bend near the root of the positive electrode protective layer 36 and achieve short circuit suppression.

As explained below, it is seen from a measurement result of the inventors that average stretching from the innermost circumferential portion to the fifth turning portion of the positive electrode plate 11 is larger than average stretching from the sixth turning portion to the outermost circumferential portion of the positive electrode plate 11. FIG. 1, FIG. 3, and FIG. 5 schematically illustrate a configuration of the electrode assembly 14. An actual number of turning portions of the positive electrode plate 11 is quite more than the number illustrated in FIG. 1, FIG. 3, and FIG. 5. Even when the average stretching from the innermost circumferential portion to the fifth turning portion of the positive electrode plate 11 is larger than the average stretching in the other portions, as in the embodiment, as the average width in the electrode plate widthwise direction of the unwelded uncoated area 39, the average width Wm1 from the innermost circumferential portion to the fifth turning portion is larger than the average width Wm2 from the sixth turning portion to the outermost circumferential portion. Therefore, it is possible to increase the short circuit suppression effect.

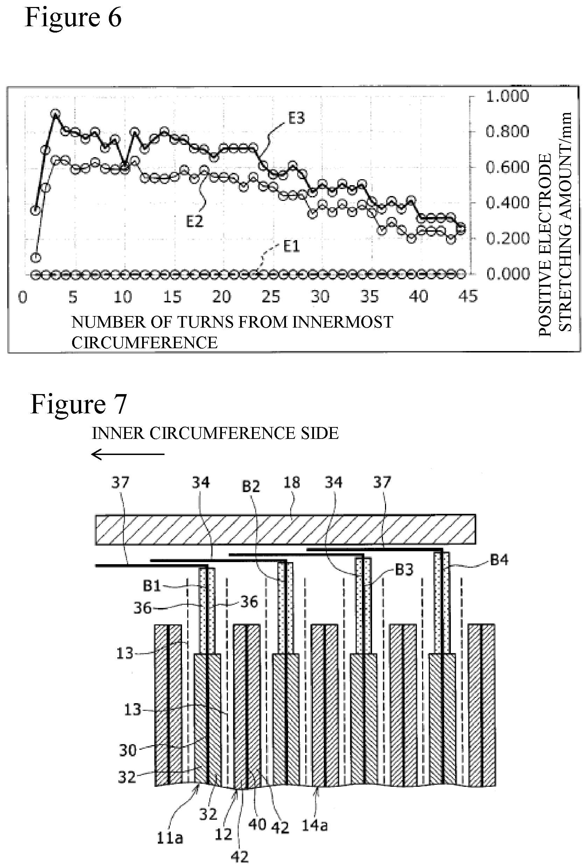

FIG. 6 illustrates a measurement result of calculating a relation between the number of turns from the innermost circumference and a stretching amount in the positive electrode plate 11. In FIG. 6, the horizontal axis indicates the number of turns from the innermost circumferential portion of the positive electrode plate 11 and the vertical axis indicates the stretching amount of the positive electrode plate 11. A broken line E1 in FIG. 6 indicates a state at a shipping time of the secondary battery 10, which is an early stage of the charging and discharging cycle. A thin solid line E2 in FIG. 6 indicates a state after 170 cycles of the charging and discharging cycle have been completed and a thick solid line E3 in FIG. 6 indicates a state after 300 cycles of the charging and discharging cycle ends. It is seen from the measurement result illustrated in FIG. 6 that the stretching amount of the positive electrode plate 11 increases as the charging and discharging cycle increases and, moreover, the stretching further tends to be larger for an inner circumferential side wall than for an outer circumferential side wall. It is also seen from the measurement result illustrated in FIG. 6 that average stretching from the innermost circumferential portion to the fifth turning portion of the positive electrode plate 11 is larger than average stretching from the sixth turning portion to the outermost circumferential portion of the positive electrode plate 11. Accordingly, it is seen that a high short circuit suppression effect can be obtained.

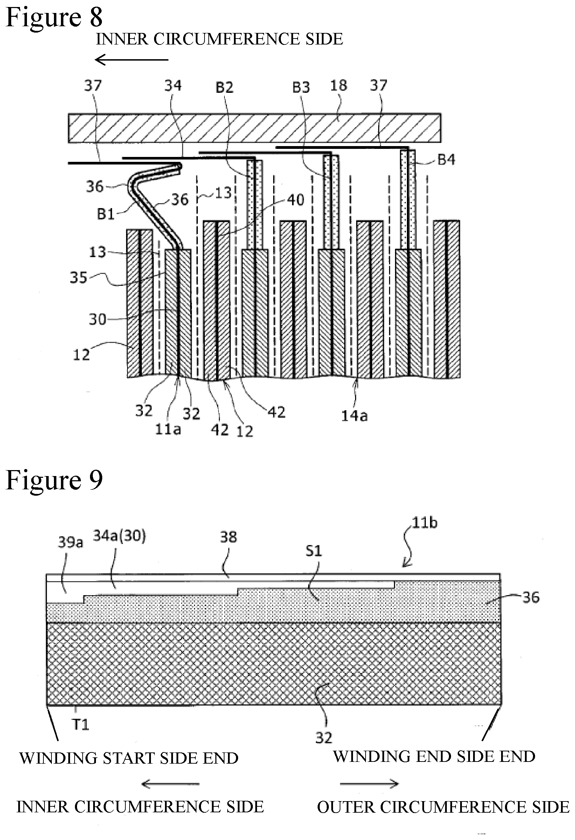

FIG. 7 is a diagram corresponding to FIG. 3 at an early stage of a charging and discharging cycle of a secondary battery in a comparative example. FIG. 8 is a diagram corresponding to FIG. 3 in the case in which the number of cycles of the charging and discharging cycle increases in the secondary battery in the comparative example. As illustrated in FIG. 7, in the comparative example, in a positive electrode plate 11a configuring an electrode assembly 14a, an unwelded uncoated area is not provided between the current collector plate welded portion 38 welded to the positive electrode current collector plate 18 and the positive electrode protective layer 36 and the entire upper side surface of the positive electrode core exposed portion 34 is joined to the positive electrode current collector plate 18 by welding as the current collector plate welded portion 38.

In the comparative example explained above, when the positive electrode plate 11a greatly stretches in the up-down direction on the inner circumference side thereof because the charging and discharging cycle increases, a portion of the positive electrode plate 11a where the positive electrode protective layer 36 is provided is pushed from the coated portion 35 side to the current collector plate welded portion 38 side in a state of being interposed between the current collector plate welded portion 38 and the coated portion 35 of the positive electrode mixture layer 32. Accordingly, the portion of the positive electrode plate 11 where the positive electrode protective layer 36 is provided tends to bend to incline in the axial direction near the root and topple to the negative electrode plate 12 side. In this case, it is likely that the positive electrode plate 11 breaks the separator 13 and comes into contact with the negative electrode plate 12 to cause a short circuit. According to the embodiment explained above, it is possible to prevent such an inconvenience.

FIG. 9 is a diagram corresponding to FIG. 4 in a secondary battery in another example of the embodiment. In a configuration in this example, in an exploded state of a positive electrode plate 11b, the upper side end edge of the positive electrode protective layer 36 changes to the upper side stepwise toward the winding end side end with respect to the electrode plate longitudinal direction such that the width in the electrode plate widthwise direction of the positive electrode protective layer 36 increases toward the outer circumference side of the electrode assembly 14.

Accordingly, in the positive electrode plate 11b, an unwelded uncoated area 39a is provided in a portion including the inner circumference side end portion between the current collector plate welded portion 38 and the positive electrode protective layer 36. Since the width in the electrode plate widthwise direction of the positive electrode protective layer 36 changes stepwise as explained above, the width in the electrode plate widthwise direction of the unwelded uncoated area 39a decreases stepwise toward the winding end side end of the outermost circumferential portion from the winding start side end of the innermost circumferential portion. In the case of a secondary battery including the positive electrode plate 11b explained above, as in the configuration illustrated in FIG. 1 to FIG. 6, even when the charging and discharging cycle increases, it is possible to obtain a high short circuit suppression effect. In this example, other components and action are the same as those in the configuration illustrated in FIG. 1 to FIG. 6.

Note that, in the examples explained above, the case in which the unwelded uncoated areas 39 and 39a are provided in the positive electrode plates 11 and 11b is explained. On the other hand, a negative electrode protective layer can also be provided in a portion protruding to the lower side from a negative electrode mixture layer of a negative electrode core of a negative electrode plate. In that case, the negative electrode plate can be configured to include a current collector plate welded portion welded to the negative electrode current collector plate 17 and an unwelded uncoated area provided in a portion including an inner circumference side end portion between the current collector plate welded portion and the negative electrode protective layer. Even in this case, like the effect by the positive electrode plates 11 and 11a in the embodiment explained above, even when the charging and discharging cycle increases, it is possible to suppress bending of a portion of the negative electrode core where the negative electrode protective layer is provided. Therefore, it is possible to obtain a high short circuit suppression effect.

### REFERENCE SIGNS LIST

10 Non-aqueous electrolyte secondary battery (secondary battery), 11, 11a, 11b Positive electrode plate, 12 Negative electrode plate, 13 Separator, 14, 14a Electrode assembly, 15 Housing, 16 Sealing assembly, 17 Negative electrode current collector plate, 18 Positive electrode current collector plate, 19 Insulating plate, 20 Positive electrode connection lead, 21 Grooved portion, 22 Filter, 23 Lower vent member, 24 Insulating member, 25 Upper vent member, 26 Cap, 26a Through hole, 27 Gasket, 28 Negative electrode connection lead, 30 Positive electrode core, 32 Positive electrode mixture layer, 34 Positive electrode core exposed portion, 35 Coated portion, 36 Positive electrode protective layer, 37 Axial direction extending portion, 38 Current collector plate welded portion, 39, 39a Unwelded uncoated area, 40 Negative electrode core, 42 Negative electrode mixture layer, 44 Negative electrode core exposed portion, 46 Negative electrode protective layer.

## Claims

1. A non-aqueous electrolyte secondary battery comprising:
an electrode assembly obtained by winding a first electrode plate and a second electrode plate via a separator; and
a current collector plate disposed on one side in a winding axial direction of the electrode assembly, wherein
the first electrode plate includes:
a first core made of metal foil;
a first mixture layer formed at least on a first surface of the first core; and
a first core exposed portion provided at one side end portion in an electrode plate widthwise direction, which is a current collector plate side, on the first surface, the first core being exposed in the first core exposed portion, wherein
a protective layer for short circuit suppression is provided in an electrode plate longitudinal direction in a boundary area between the first mixture layer and the first core exposed portion on the first surface, and
the first electrode plate includes: a current collector plate welded portion welded to the current collector plate; and an unwelded uncoated area provided in a portion including an inner circumference side end portion between the current collector plate welded portion and the protective layer.

2. The non-aqueous electrolyte secondary battery according to claim 1, wherein, based on a center in the electrode plate longitudinal direction, a maximum width in the electrode plate widthwise direction of the unwelded uncoated area is larger on an inner circumference side than on an outer circumference side.

3. The non-aqueous electrolyte secondary battery according to claim 2, wherein an average width in the electrode plate widthwise direction of the unwelded uncoated area is larger from an innermost circumferential portion to a fifth turning portion than from a sixth turning portion to an outermost circumferential portion.

4. The non-aqueous electrolyte secondary battery according to claim 2, wherein a width in the electrode plate widthwise direction of the unwelded uncoated area decreases continuously or stepwise toward a winding end side end of an outermost circumferential portion from a winding start side end of an innermost circumferential portion.
